(19) Europäisches Patentamt
European Patent Office
Office européen des brevets

(11) EP 3 271 409 B1

(12) EUROPÄISCHE PATENTSCHRIFT

(45) Veröffentlichungstag und Bekanntmachung des Hinweises auf die Patenterteilung:
**08.05.2019 Patentblatt 2019/19**

(21) Anmeldenummer: **16709335.0**

(22) Anmeldetag: **08.03.2016**

(51) Int Cl.:
***C08F 265/06*** (2006.01) ***C09D 151/00*** (2006.01)

(86) Internationale Anmeldenummer:
**PCT/EP2016/054858**

(87) Internationale Veröffentlichungsnummer:
**WO 2016/146427 (22.09.2016 Gazette 2016/38)**

(54) **OXAZOLIN-HALTIGE WÄSSRIGE POLYMERDISPERSIONEN FÜR DIE VERBUNDFOLIENKASCHIERUNG**

OXAZOLINE-CONTAINING AQUEOUS POLYMER DISPERSIONS FOR COMPOSITE FILM LAMINATION

DISPERSIONS AQUEUSES DE POLYMÈRES CONTENANT DE L'OXAZOLINE POUR LE CONTRECOLLAGE DE FILMS COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2015 EP 15159621**

(43) Veröffentlichungstag der Anmeldung:
**24.01.2018 Patentblatt 2018/04**

(73) Patentinhaber: **BASF SE**
**67056 Ludwigshafen am Rhein (DE)**

(72) Erfinder:
- **ZORN, Matthias**
  **64646 Heppenheim (DE)**
- **SCHUMACHER, Karl-Heinz**
  **67433 Neustadt (DE)**

(74) Vertreter: **BASF IP Association**
**BASF SE**
**G-FLP-C006**
**67056 Ludwigshafen (DE)**

(56) Entgegenhaltungen:
**WO-A1-2006/112538** **WO-A1-2008/102816**
**US-A- 4 886 856**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft wässrige Polymerdispersionen für die Verbundfolienkaschierung sowie ein mehrstufiges Verfahren zu deren Herstellung aus ethylenisch ungesättigten, radikalisch polymerisierbaren Monomeren. In einer ersten Stufe wird durch radikalische Emulsionspolymerisation ein erstes Polymerisat hergestellt. In einer weiteren Stufe wird eine wässrige Polymerdispersion in Gegenwart des ersten Polymerisats hergestellt. Die Monomeren der ersten Stufe umfassen Monomere mit Säuregruppen. Die Monomeren der weiteren Stufe umfassen Monomere mit Oxazolingruppen. Die Polymerisation der ersten Stufe erfolgt bei niedrigem pH-Wert von kleiner 5. Die Säuregruppen des ersten Polymerisats werden vor der Polymerisation der weiteren Stufe neutralisiert. Die wässrigen Polymerdispersionen können als Klebstoff für die Herstellung von Verbundfolien verwendet werden.

Kaschierklebstoffe für die Verbundfolienkaschierung auf Basis von wässrigen Polymerdispersionen benötigen in der Regel einen Vernetzer, um eine Erhöhung der Chemikalienbeständigkeit oder der Wärmebeständigkeit zu erhalten. Häufig werden die Kaschierklebstoffdispersionen hierfür mit Isocyanatvernetzern formuliert. Nachteilig ist, dass diese Formulierungen eine relativ geringe Verarbeitungszeit (sogenannte Topfzeit) aufweisen und gesundheitlich bedenklich sein können. Herkömmliche wässrige Polymerdispersionen benötigen außerdem in der Regel relativ hohe Emulgatormengen zur Stabilisierung der Dispersion. Nachteilig ist, dass hohe Emulgatormengen die Sofortklebrigkeit von wässrigen Kaschierklebstoffformulierungen senken können. Polymerdispersionen, hergestellt mit Oxazolinmonomeren werden beschrieben in EP 0176609, JP 2013-057081 oder WO 06/112538. Diese Polymerdispersionen enthalten relativ hohe Emulgatormengen, was für Anwendungen als Verbundfolienkaschierklebstoffe nachteilig ist. Polymerdispersionen für die Verbundfolienkaschierung ohne Oxazolinmonomere werden beschrieben in der WO 2011/154920.

Die Aufgabe bestand darin, wässrige Polymerdispersionen für die Verbundfolienkaschierung zur Verfügung zu stellen, welche eine möglichst lange Topfzeit aufweisen, gesundheitlich möglichst unbedenklich sind und mit denen Verbundfolien mit möglichst guter Chemikalienbeständigkeit, möglichst guter Soforthaftung und möglichst guter Wärmestandfestigkeit herstellbar sind.

Es wurde gefunden, dass die Aufgabe gelöst werden kann durch das nachfolgend näher erläuterte Herstellverfahren und durch die nach diesem Verfahren erhältlichen Polymerdispersionen. Gegenstand der Erfindung ist eine wässrige Polymerdispersion für die Verbundfolienkaschierung, hergestellt durch radikalische Emulsionspolymerisation,

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, und wobei
- in einer weiteren Stufe eine Polymerdispersion in wässrigem Medium und in Gegenwart des ersten Polymerisats durch radikalische Emulsionspolymerisation einer von der ersten Zusammensetzung verschiedenen weiteren Zusammensetzung, enthaltend ethylenisch ungesättigte, radikalisch polymerisierbare Monomere, hergestellt wird,
- wobei die Monomeren der ersten Stufe mindestens ein Monomer mit mindestens einer Säuregruppe in einer Menge von mindestens 0,1 Gew.-Teilen, bezogen auf 100 Gew.-Teile der Monomeren aller Stufen, umfassen, und
- wobei die Monomeren der weiteren Stufe mindestens ein Monomer mit mindestens einer Oxazolingruppe umfassen, und
- wobei die Polymerisation der ersten Stufe bei einem pH-Wert kleiner 5, vorzugsweise kleiner oder gleich 4,5 erfolgt und vor der Polymerisation der weiteren Stufe die Säuregruppen soweit mit flüchtiger Base, vorzugsweise wässriger Ammoniaklösung neutralisiert werden, dass der pH-Wert der Polymerdispersion vor der weiteren Stufe größer 5 vorzugsweise größer oder gleich 5,5 beträgt, und
- wobei insgesamt weniger als 0,5 Gewichtsteile, bezogen auf 100 Gewichtsteile Monomere, oder kein Emulgator verwendet werden, und
- wobei die Glasübergangstemperatur des hergestellten Polymerisats kleiner als -10 °C beträgt.

Gegenstand der Erfindung ist auch ein entsprechendes Verfahren zur Herstellung wässriger Polymerdispersionen. Das beschriebene Verfahren umfasst die Herstellung von Polyacrylatdispersionen insbesondere für die Anwendung in der Verbundfolienkaschierung durch ein speziell angepasstes, sogenanntes (mehrstufiges) Eintopfverfahren, das auf der Stabilisation von Emulsionspolymerisaten durch "in situ", d.h. während der Emulsionspolymerisation gebildeten Schutzkolloiden basiert.

Das Prinzip des erfindungsgemäßen Verfahrens beruht auf der vorzugsweise saatgesteuerten Bildung von kleinen Polymerpartikeln in wässriger Dispersion in einer ersten Polymerisationsstufe durch radikalische Polymerisation einer ersten Monomerzusammensetzung, enthaltend mindestens ein ethylenisch ungesättigtes Monomer mit mindestens einer Säuregruppe (z.B. eines Gemisches aus Alkyl(meth)acrylat und (Meth)acrylsäure) sowie anschließender Neutralisation und nachfolgender Zuführung der Hauptmonomere, z.B. eines Gemisches aus Alkyl(meth)acrylaten, Oxazolinmonomeren und optional Styrol. Die in der ersten Stufe gebildeten Partikel können nach Neutralisation als Schutzkolloide wirksam werden und dadurch die erfindungsgemäße Polymerdispersion stabilisieren. Zu Beginn der Reaktion der ersten

Stufe sinkt der pH-Wert im Reaktionsgefäß durch kontinuierliche Säurezugabe stetig ab. Hierdurch bedingt liegen die in der ersten Polymerisationsstufe gebildeten Polymerisatteilchen ungelöst vor. Erst mit Neutralisation (z.B. durch Zugabe von Ammoniak) vor derjenigen Polymerisationsstufe, die das oxazolinhaltige Monomer enthält, wird ein Schutzkolloid gebildet, welches in der mit Zugabe der Hauptmonomere einsetzenden Emulsionspolymerisation dispersionsstabilisierend wirken kann, da das Schutzkolloid vorzugsweise aus unpolaren Alkyl(meth)acrylateinheiten und polaren, neutralisierten (Meth)acrylsäure- oder Itaconsäureeinheiten zusammengesetzt ist.

Gegenstand der Erfindung sind auch die Verwendung der erfindungsgemäßen wässrigen Polymerdispersionen als Kaschierklebstoff, zur Herstellung von Kaschierklebstoffen oder bei der Herstellung von Verbundfolien, entsprechende Verbundfolien sowie ein entsprechendes Verfahren zur Herstellung von Verbundfolien, wobei eine erfindungsgemäße wässrige Polymerdispersion zur Verfügung gestellt wird und mindestens zwei Folien unter Verwendung der wässrigen Polymerdispersion miteinander verklebt werden.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Die Glasübergangstemperatur wird durch Differential Scanning Calorimetrie (ASTM D 3418-08, sogenannte "midpoint temperature") bestimmen. Die Glasübergangstemperatur des Polymerisats der Polymerdispersion ist die bei Auswertung der zweiten Heizkurve (Heizrate 20° C/min) erhaltene Glasübergangstemperatur.

Die erfindungsgemäß hergestellten Polymerdispersionen sind durch radikalische Emulsionspolymerisation von ethylenisch ungesättigten Verbindungen (Monomeren) erhältlich. Die Polymerisation sowohl der ersten als auch der weiteren Stufe erfolgt dabei vorzugsweise emulgatorfrei oder emulgatorarm in dem Sinne, dass kein Emulgator zur Stabilisierung der erfindungsgemäßen Polymerdispersion zugesetzt wird. Emulgatoren sind der Polymerisationsmischung zugesetzte, nicht-polymere, amphiphile, oberflächenaktive Substanzen. Geringe Mengen an Emulgatoren, die z.B. durch die Verwendung von emulgatorstabilisierter Polymersaat bedingt sind, sind dabei unschädlich. Es werden insgesamt weniger als 0,5 Gewichtsteile, insbesondere weniger als 0,4 Gewichtsteile, weniger als 0,3 Gewichtsteile Emulgator, bezogen auf 100 Gewichtsteile aller Monomere der Polymerdispersion, oder kein Emulgator verwendet. Insbesondere wird vorzugsweise auch kein reaktiver, d.h. copolymerisierbarer Emulgator eingesetzt.

In der ersten Stufe wird ein Polymerisat hergestellt aus Monomeren, welche mindestens ein Monomer mit mindestens einer Säuregruppe in einer Menge von mindestens 0,1 Gew.-Teilen, vorzugsweise von 1 bis 10 Gew.-Teilen bezogen auf 100 Gewichtsteile der Gesamtmenge aller Monomere, umfassen. Vorzugsweise werden in der ersten Stufe Säuregruppen aufweisende Monomere (Säuremonomere) mit Monomeren ohne Säuregruppen, insbesondere nichtionischen Monomeren, copolymerisiert. Das Gewichtsverhältnis von Säuregruppen aufweisenden Monomeren zu Monomeren ohne Säuregruppen liegt im Monomerengemisch der ersten Polymerisationsstufe vorzugsweise im Bereich von 0,5 : 99,5 bis 30: 70, vorzugsweise von 1 : 99 bis 20 : 80 oder von 1:99 bis 15 : 85.

Das Polymerisat der ersten Stufe ist bei niedrigen pH-Werten von z.B. 2 bis 3 und mit nicht neutralisierten Säuregruppen nicht wasserlöslich aber in Wasser dispergiert. Wenn vor der Polymerisation der zweiten Stufe Neutralisationsmittel zugegeben wird, erhöht sich mit steigendem Neutralisationsgrad der Säuregruppen die Wasserlöslichkeit des Polymerisats der ersten Stufe. Mit zunehmender Wasserlöslichkeit kann das Polymerisat der ersten Stufe als Schutzkolloid für das Polymer der weiteren Stufe wirken und die Polymerdispersion mit hohem Polymerfeststoffgehalt stabilisieren. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Das zahlenmittlere Molekulargewicht der Schutzkolloide liegt vorzugsweise oberhalb von 1000 g/mol, insbesondere oberhalb von 2000 g/mol und bevorzugt bis zu 50000 g/mol oder bis zu 10000 g/mol. beispielsweise von 1000 bis 100000 g/mol, von 1000 bis 10000 g/mol oder von 2000 bis 10000 g/mol.

Die bei Neutralisation als Schutzkolloide wirksam werdenden Polymerisate der ersten Stufe werden vorzugsweise in einer Menge von 1 bis 60 Gew.-% oder von 5 bis 50 Gew.-%, oder von 7 bis 40 Gew.% oder von 10 bis 30 Gew.-% (insbesondere wenn der Gesamtfeststoffgehalt der erfindungsgemäßen Polymerdispersion mehr als 50 Gew.% beträgt), bezogen auf 100 Gew.-% der zu polymerisierenden Monomeren verwendet.

Die Säuregruppen des Polymerisats der ersten Stufe werden partiell oder vollständig mit geeigneten Basen neutralisiert. Vorzugsweise verwendet man flüchtige Basen, insbesondere flüchtige organische Basen oder Ammoniak. Ammoniak wird vorzugsweise in Form von wässriger Ammoniaklösung eingesetzt. Flüchtige Basen bzw. flüchtige Amine sind vorzugsweise solche mit einem Siedepunkt unter 60°C, vorzugsweise unter 20°C bei Normaldruck.

Monomere mit Säuregruppen (Säuremonomere) werden in einer Menge von mindestens 0,1 Gewichtsteilen und vorzugsweise weniger als 5 Gewichtsteilen auf 100 Gewichtsteile Monomere eingesetzt, z.B. von 0,1 bis 4 Gewichtsteilen. Säuremonomere sind ethylenisch ungesättigte Säuremonomere, beispielsweise ethylenisch ungesättigte Carbonsäuren, Vinylphosphonsäure oder copolymerisierbare Phosphorsäuren. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure, Vinylmilchsäure und ethylenisch ungesättigte Phosphonsäuren. Bevorzugt sind Acrylsäure und Methacrylsäure und deren Gemisch, besonders bevorzugt ist Acrylsäure.

Die in der ersten Stufe eingesetzten Säuremonomere können in der ersten Stufe mit Monomeren ohne Säuregruppe copolymerisiert werden. Das Polymerisat der ersten Stufe wird vorzugsweise gebildet aus mindestens 40 Gew.-%, unten näher definierten, nichtionischen Hauptmonomeren sowie aus einer zweiten Monomerart, ausgewählt aus ethylenisch ungesättigten Säuremonomeren. Das Polymerisat der ersten Stufe kann darüber hinaus optional aus weiteren, vorzugsweise nichtionischen Monomeren gebildet sein. Das Polymerisat der ersten Stufe ist vorzugsweise zu mindestens 40 Gew.-%, insbesondere von 40 bis 80 Gew.% oder von 50 bis 80 Gew.% aus Hauptmonomeren aufgebaut, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren. Hauptmonomere für das Polymerisat der ersten Stufe sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Hauptmonomere für das Polymerisat der ersten Stufe bevorzugt sind die $C_1$- bis $C_{10}$-Alkylacrylate und -methacrylate, insbesondere $C_1$- bis $C_8$-Alkylacrylate und -methacrylate. Ganz besonders bevorzugt ist das Polymerisat der ersten Stufe ein sogenanntes Reinacrylat, d.h. es ist (neben Säuremonomeren) ausschließlich aus (Meth)acrylsäurederivaten (z.B. deren Estern) gebildet.

In einer bevorzugten Ausführungsform handelt es sich bei dem Polymerisat der ersten Stufe um ein Copolymer, welches

(i) in einer Menge von 5 bis 40 Gew.%, bezogen auf 100 Gew.-% der insgesamt in allen Stufen zu polymerisierenden Monomeren, eingesetzt wird,
(ii) zu mindestens 50 Gew.-% und bis zu 99,9 Gew-% bezogen auf die Summe der Monomere aller Stufen aus Hauptmonomeren aufgebaut ist, welche ausgewählt sind aus der Gruppe bestehend aus C1- bis C10-Alkyl(meth)acrylaten, und Mischungen dieser Monomeren, und
(iii) zu mindestens 0,1 Gew.% und bis zu 4 Gew-% bezogen auf die Summe der Monomere aller Stufen aus ethylenisch ungesättigten Säuremonomeren aufgebaut ist, welche vorzugsweise ausgewählt sind aus Acrylsäure, Methacrylsäure, Itaconsäure und deren Gemisch.

In einer Ausführungsform der Erfindung wird bei der Polymerisation der ersten Stufe mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 0,8 Gew.-Teile und ganz besonders bevorzugt 0,1 bis 0,6 Gew.-Teile, bezogen auf 100 Gew.-Teile der zu polymerisierenden Monomeren aller Stufen. Geeignete Regler sind z.B. Verbindungen mit einer Thiolgruppe wie tert.-Butylmercaptan, Thioglycolsäureethylhexylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

In einer bevorzugten Ausführungsform der Erfindung erfolgt die Polymerisation der ersten Stufe in Gegenwart von Saatlatex. Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,05 bis 5 Gew.%, besonders bevorzugt von 0,1 bis 3 Gew.%, bezogen auf die Gesamtmonomermenge aller Stufen. Geeignet ist z.B. ein Latex auf Basis von Polystyrol oder auf Basis von Polymethylmethacrylat. Ein bevorzugter Saatlatex ist Polystyrolsaat.

Die Oxazolingruppen aufweisenden Monomere werden bevorzugt in einer Menge im Bereich von 0,5 bis 4 Gewichtsteilen, besonders bevorzugt von 0,75 bis 3 Gewichtsteilen auf 100 Gewichtsteile Monomere aller Stufen eingesetzt. Vorzugsweise werden die Oxazolingruppen enthaltenden Monomere ausschließlich in der weiteren Polymerisationsstufe eingesetzt. Bei den Oxazolingruppen aufweisenden Monomeren handelt es sich um ein monoethylenisch ungesättigtes, hydrophiles Monomer, welches mindestens eine Oxazolingruppe, insbesondere mindestens eine 2-Oxazolingruppe, umfasst (im Folgenden auch Oxazolin-Monomer genannt). Bevorzugt umfasst das Monomer genau eine

Oxazolingruppe, insbesondere genau eine 2-Oxazolingruppe.

Bei einem Oxazolin-Monomer handelt es sich um eine organische Verbindung enthaltend mindestens eine ethylenisch ungesättigte Gruppe und mindestens eine Oxazolingruppe. Im Sinne der vorliegenden Erfindung bezeichnet eine Oxazolingruppe eine heterozyklische Verbindung, welche einen fünfgliedrigen Ring umfassend genau ein Sauerstoffatom und genau ein Stickstoffatom umfasst. Insbesondere handelt es sich bei der Oxazolin-Gruppe um eine 2-Oxazolin-Gruppe, welche durch das folgende Strukturelement beschrieben werden kann.

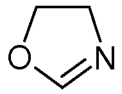

Bevorzugt handelt es sich bei dem Oxazolin-Monomer um eine Verbindung gemäß Formel:

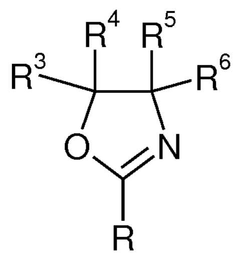

wobei die Reste die folgenden Bedeutungen haben:

R ist ein $C_{2-20}$-Alkenylrest, umfassend mindestens eine ethylenisch ungesättigte Gruppe;

$R^3$, $R^4$, $R^5$, $R^6$ sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl, bevorzugt ausgewählt aus H, Halogen und $C_{1-20}$-Alkyl.

Eine ethylenisch ungesättigte Gruppe bezeichnet eine endständige C=C-Doppelbindung. Alkyl bezeichnet einen univalenten Rest bestehend aus einer linearen, verzweigten oder cyclischen Kohlenwasserstoffgruppe, bevorzugt aus einer linearen oder verzweigten Kohlenwasserstoffkette, insbesondere umfassend 1 bis 20 Kohlenstoffatome, bevorzugt 1 bis 18 Kohlenstoffatome, besonders bevorzugt 1 bis 12 Kohlenstoffatome. Beispielsweise kann es sich bei dem Alkylrest um Methyl, Ethyl, n-Propyl oder iso-Propyl handeln.

Alkenyl bezeichnet einen univalenten Rest bestehend aus einer linearen oder verzweigten Kohlenwasserstoffkette, insbesondere umfassend 2 bis 20 Kohlenstoffatome, bevorzugt 2 bis 18 Kohlenstoffatome, besonders bevorzugt 2 bis 12 Kohlenstoffatome, welche eine oder mehrere C-C Doppelbindungen umfasst, wobei die C-C-Doppelbindungen innerhalb der Kohlenwasserstoffkette oder am Ende der Kohlenwasserstoffkette (endständig C=C-Doppelbindung) auftreten können. Beispielsweise kann es sich bei einem Alkenyl-Rest um einen Allyl-Rest handeln.

Aryl bezeichnet eine substituierte oder unsubstituierte aromatische Kohlenwasserstoff-Gruppe, insbesondere umfassend 6 bis 20 Kohlenstoffatome. Beispielsweise kann es sich bei dem Arylrest um eine Phenylgruppe handeln.

Arylalkyl bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Arylgruppe, wobei die Arylgruppe eine substituierte oder unsubstituierte aromatische Kohlenwasserstoff-Gruppe, insbesondere umfassend 6 bis 14 Kohlenstoffatome, ist. Beispielsweise kann es sich bei der aromatische Kohlenwasserstoff-Gruppe um Phenyl handeln; beispielsweise kann es sich bei dem Arylalkyl-Rest um einen Benzyl-Rest handeln.

Halogen bezeichnet einen Substituenten ausgewählt aus Fluor, Chlor, Brom oder Iod, bevorzugt Chlor.

Haloalkyl bezeichnet einen univalenten Rest abgeleitet von einem linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch ein Halogenatom (-F, -Cl, -Br, -I, insbesondere Cl). Entsprechendes gilt für die Reste Hydroxyalkyl und Aminoalkyl.

Bevorzugt ist R ein $C_{1-10}$-Alkenylrest, bevorzugt ein $C_{1-6}$-Alkenylrest, umfassend mindestens eine ethylenisch ungesättigte Gruppe. In einer bevorzugten Ausführungsform umfasst der Rest R genau eine ethylenisch ungesättigte Gruppe. Der Rest R ist insbesondere ausgewählt aus Vinyl, Allyl, Isopropenyl (2-Propen-2-yl), 2-Propen-1-yl, 3-Buten-1-yl, oder 4-Buten-1-yl. Insbesondere bevorzugt ist R Vinyl oder Isopropenyl, besonders bevorzugt Isopropenyl.

Bevorzugt sind die Reste $R^3$, $R^4$, $R^5$ und $R^6$ unabhängig voneinander ausgewählt aus H, Halogen, $C_{1-10}$-Alkyl, $C_{6-12}$-Aryl, $C_{7-13}$-Arylalkyl, $C_{1-10}$-Alkoxy, $C_{1-10}$-Hydroxyalkyl, $C_{1-10}$-Aminoalkyl und $C_{1-10}$-Haloalkyl; insbesondere ausgewählt aus H und $C_{1-6}$-Alkyl, besonders bevorzugt aus H, Methyl, Ethyl, n-Propyl, iso-Propyl, n-Butyl, n-Pentyl und n-Hexyl, insbesondere ausgewählt aus H, Methyl und Ethyl. In einer bevorzugten Ausführungsform handelt es sich bei mindestens zwei der Reste $R^3$, $R^4$, $R^5$ und $R^6$ um H. In einer bevorzugten Ausführungsform handelt es sich bei den Resten $R^3$ und $R^4$ um H. In einer bevorzugten Ausführungsform handelt es sich bei allen Resten $R^3$, $R^4$, $R^5$ und $R^6$ um H. In einer bevorzugten Ausführungsform handelt es sich mindestens zwei der Reste $R^3$, $R^4$, $R^5$ und $R^6$ um H.

In einer bevorzugten Ausführungsform sind die Reste $R^3$, $R^4$, $R^5$ und $R^6$ unabhängig voneinander ausgewählt aus H, Methyl und Ethyl und es handelt sich bei mindestens zwei der Reste $R^3$, $R^4$, $R^5$ und $R^6$ um H, bevorzugt handelt es sich bei den Resten $R^3$ und $R^4$ um H.

Insbesondere bevorzugt handelt es sich bei den Oxazolin-Monomeren um mindestens ein Monomer ausgewählt aus der Gruppe bestehend aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-tetramethyl-2-oxazolin, 2-Isopropenyl-2-oxa-zolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2-Isopropenyl-5,5-dimethyl-2-oxazolin und 2-Isopropenyl-4,4,5,5-tetramethyl-2-oxazolin. Besonders bevorzugt ist die Verwendung von 2-Vinyl-2-oxazolin und/oder 2-Isopropenyl-2-oxazolin, insbesondere bevorzugt ist 2-Isopropenyl-2-oxazolin (iPOx).

Bei den für die Polymerisation der weiteren-Stufe eingesetzten Monomeren handelt es sich vorzugsweise zu mindestens 60 Gew.-%, bevorzugt zu mindestens 80 Gew.-%, z.B. von 80 bis 99,5 Gew.%, besonders bevorzugt zu mindestens 90 Gew.-% aus einem oder mehreren der nachfolgend beschriebenen Hauptmonomeren. Die Hauptmonomeren sind ausgewählt aus der Gruppe bestehend aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt.

Als Hauptmonomere für die Polymerisation der weiteren Stufe bevorzugt sind die $C_1$- bis $C_{10}$-Alkylacrylate und -methacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Butylmethacrylat, n-Hexyl-acrylat, Octylacrylat und 2-Ethylhexylacrylat, 2-Propylheptylacrylat sowie Mischungen dieser Monomere.

Neben den Hauptmonomeren können die Monomere für die Polymerisation der weiteren Stufe weitere Monomere umfassen, z.B. Hydroxylgruppen enthaltende Monomere, insbesondere $C_1$-$C_{10}$-Hydroxyalkyl(meth)acrylate sowie (Meth)acrylamid. Als weitere Monomere seien darüber hinaus Phenyloxyethylglykolmono-(meth-)acrylat, Glycidylacrylat, Glycidylmethacrylat, Amino-(meth-)acrylate wie 2-Aminoethyl-(meth)acrylat genannt. Als weitere Monomere seien auch vernetzende Monomere genannt. Vorzugsweise umfassen die in der weiteren Stufe eingesetzten Monomeren maximal 1 Gewichtsteil Monomere mit Säuregruppen oder keine Monomere mit Säuregruppen, bezogen auf die Summe aller Monomere.

Insbesondere sind die Monomere für die Polymerisation der weiteren Stufe zu mindestens 60 Gew.-%, besonders bevorzugt zu mindestens 80 Gew.-%, z.B. von 60 bis 99,5 Gew.%, und ganz besonders bevorzugt zu mindestens 95 Gew.-% ausgewählt aus mindestens einem $C_1$ bis $C_{20}$ Alkyl(meth)acrylat.

Vorzugsweise handelt es sich bei den Polymerisaten der ersten und der weiteren Stufe (abgesehen von den Oxazolingruppen enthaltenden Monomeren und von Säuremonomeren) um Reinacrylate, d.h. um Polymerisate, die neben Oxazolingruppen enthaltenden Monomeren und Säuremonomeren (vorzugsweise (Meth)acrylsäure und/oder Itaconsäure) ausschließlich aus Derivaten der (Meth)acrylsäure (vorzugsweise deren Estern) gebildet sind.

Vorzugsweise sind die Monomere der Polymerisation der weiteren Stufe so ausgewählt, dass die für ein aus den Monomeren der weiteren Stufe hergestelltes Polymer berechnete Glasübergangstemperatur im Bereich von -45 °C bis +15 °C, insbesondere von -40 °C bis +10 °C liegt. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der

technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g{}^1 + x^2/T_g{}^2 + .... x^n/T_g{}^n,$$

wobei $x^1$, $x^2$, .... $x^n$ die Massenbrüche der Monomeren 1, 2, .... n und $T_g{}^1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die tatsächliche Glasübergangstemperatur des Polymerisats der erfindungsgemäßen Polymerdispersion (alle Stufe) liegt vorzugsweise im Bereich von kleiner oder gleich -10 °C, z.B. von -40 bis -10 °C. Die tatsächliche Glasübergangstemperatur lässt sich bestimmen durch Differential Scanning Calorimetrie (ASTM D 3418-08, sogenannte "midpoint temperature"). Hierbei handelt es sich um die bei Auswertung der zweiten Heizkurve (Heizrate 20° C/min) erhaltene Glasübergangstemperatur.

Zwischen der Polymerisation der ersten, Säuremonomere enthaltenden Polymerisationsstufe und der weiteren, Oxazolinmonomere enthaltenden Polymerisationsstufe können eine oder mehrere zusätzliche Polymerisationsstufen erfolgen, welche vorzugsweise ebenfalls Säuremonomere enthalten können und prinzipiell nach Art und Mengen die gleichen Monomere beinhalten können wie die erste Polymerisationsstufe.

Das Gewichtsverhältnis der Menge der in der ersten Stufe und optional in zusätzlichen (vorzugsweise säurehaltigen) Stufen eingesetzten Monomere zur Menge der in der weiteren, oxazolinhaltigen Stufe eingesetzten Monomere beträgt vorzugsweise von 10:90 bis 90:10 oder von 10:90 bis 60:40, besonders bevorzugt von 10:90 bis 65:35.

Die Herstellung der erfindungsgemäßen Polymerdispersion erfolgt durch Emulsionspolymerisation. Bei der Emulsionspolymerisation werden ethylenisch ungesättigte Verbindungen (Monomere) in Wasser polymerisiert, wobei üblicherweise ionische und/oder nicht -ionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Erfindungsgemäß erfolgt aber die Polymerisation aller Stufen emulgatorarm oder ganz oder nahezu emulgatorfrei. Zur Stabilisierung der bei der Polymerisation der weiteren Stufen entstehenden Polymerdispersion wird das Polymerisat der ersten Stufe verwendet, welches in situ durch Zugabe von Neutralisationsmittel von einem nicht als Schutzkolloid wirksamen, wasserunlöslichen Polymer in ein als Schutzkolloid wirksames Polymer umgewandelt wird.

Vorzugsweise erfolgt die Neutralisation von Säuregruppen des ersten Polymerisats durch Zulauf eines Neutralisationsmittels vor der Polymerisation der weiteren Stufe. Nach Zulauf sämtlicher Monomere ist vorzugsweise die zur Neutralisation von mindestens 10%, vorzugsweise 30 bis 100% oder 30 bis 90% Säureäquivalenten benötigte Menge an Neutralisationsmittel in dem Polymerisationsgefäß enthalten.

Die Emulsionspolymerisation der ersten und zweiten Stufe kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Bei der Polymerisation der weiteren und der optionalen zusätzlichen Stufen können die oben genannten Molekulargewichtsregler eingesetzt werden. Vorzugsweise erfolgt die Polymerisation der weiteren und der optionalen zusätzlichen Stufen aber ohne Zugabe von weiteren Molekulargewichtsreglern.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation der ersten Stufe kann sowohl als Batchprozess als auch in Form eines Zulaufverfahrens, einschließlich Stufen- oder Gradientenfahrweise, durchgeführt werden. Bei der Polymerisation wird zur besseren Einstellung der Teilchengröße bevorzugte eine Polymersaat vorgelegt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-%, besonders bevorzugt größer oder gleich 50 Gew.-% erhalten. Für eine hohe Raum/ Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat, durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymerisat wird vorzugsweise in Form seiner wässrigen Dispersion verwendet. Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 200 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise durch hydrodynamische Chromatographie (HDC) gemessen werden. Bei bi- oder multimodaler Teilchengrößenverteilung kann die Teilchengröße bis zu 1000 nm betragen. Der pH-Wert der Polymerdispersion wird vorzugsweise auf pH größer 5, insbesondere auf einen pH-Wert zwischen 5,5 und 8 eingestellt.

Die erfindungsgemäßen Polymerdispersionen werden erfindungsgemäß in wässrigen Klebstoffzubereitungen für die Herstellung von Laminaten, d. h. in wässrigen Kaschierklebstoffzubereitungen zum Verkleben von großflächigen Substraten, insbesondere für die Herstellung von Verbundfolien verwendet.

Die vorliegende Erfindung betrifft somit auch ein Verfahren zur Herstellung von Verbundfolien, bei dem man eine wässrige Klebstoffzubereitung einsetzt, die wenigstens eine erfindungsgemäße Polymerdispersion umfasst. Hierbei können die wässrigen Polymerdispersionen als solche oder nach Konfektionierung mit üblichen Hilfsstoffen eingesetzt werden. Übliche Hilfsstoffe sind beispielsweise Netzmittel, Verdicker, weitere Schutzkolloide, Lichtschutzstabilisatoren, Biozide, Entschäumer usw. Die erfindungsgemäßen Klebstoffzubereitungen benötigen nicht den Zusatz von weichmachenden Harzen (Tackifiern) oder anderen Weichmachern. Bei dem Verfahren zur Herstellung von Verbundfolien werden mindestens zwei Folien unter Verwendung der wässrigen Polymerdispersion miteinander verklebt.

Bei dem erfindungsgemäßen Verfahren zur Herstellung von Verbundfolien wird die erfindungsgemäße Polymerdispersion oder eine entsprechend konfektionierte Zubereitung auf die zu verklebenden, großflächigen Substrate vorzugsweise mit einer Schichtdicke von 0,1 bis 20 $g/m^2$, besonders bevorzugt 1 bis 7 $g/m^2$ z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 $kN/m^2$, vorzugsweise 300 bis 2000 $kN/m^2$ betragen kann.

Vorzugsweise wird die erfindungsgemäße Polymerdispersion als Einkomponentenmittel angewendet, d.h. ohne zusätzliche Vernetzungsmittel, insbesondere ohne Isocyanatvernetzer. Wenigstens eine der Folien kann auf der mit dem Klebstoff beschichteten Seite bedruckt oder metallisiert sein. Als Substrate eignen sich z. B. Polymerfolien, insbesondere aus Polyethylen (PE), orientiertem Polypropylen (OPP), ungerecktes Polypropylen (CPP), Polyamid (PA), Polyethylenterephthalat (PET), Polyacetat, Zellophan, mit Metall, z. B. Aluminium, beschichtete (bedampfte) Polymerfolien (kurz : metallisierte Folien) oder Metallfolien, z. B. aus Aluminium. Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein.

Eine Ausführungsform der Erfindung ist eine Verbundfolie, hergestellt unter Verwendung einer der oben beschriebenen erfindungsgemäßen wässrigen Polymerdispersionen, wobei das Material einer ersten Folie ausgewählt ist aus OPP, CPP, PE, PET und PA und wobei das Material einer zweiten Folie ausgewählt ist aus OPP, CPP, PE, PET, PA und Metallfolie. In einer Ausführungsform der Erfindung ist die erste Folie und/oder die zweite Folie auf der jeweiligen Seite, welche mit der erfindungsgemäßen Polymerdispersion beschichtet wird, bedruckt oder metallisiert. Die Dicke der Substratfilme kann beispielsweise von 5 bis 100 μm, vorzugsweise von 5 bis 40 μm betragen.

Eine Oberflächenbehandlung der Foliensubstrate ist vor der Beschichtung mit einer erfindungsgemäßen Polymerdispersion nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z.B. Corona-behandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Es ist ein Vorteil der Erfindung, dass unterschiedlichste Substrate miteinander verklebt, d.h. kaschiert werden können, wobei die erfindungsgemäßen Polymerdispersionen eine gute Haftung der Klebstoffzubereitung an den Substraten gewährleisten und eine hohe Festigkeit des verklebten Verbundes bewirken. Zudem zeichnen sich die erfindungsgemäßen Polymerdispersionen durch eine gute Soforthaftung und eine gute Wärmestandfestigkeit aus.

Besondere Vorteile des erfindungsgemäßen Herstellverfahrens und der erfindungsgemäßen Produkte sind insbesondere:

- lange Topfzeit, vorzugsweise mindestens 10 Tage bei 50 °C
- gute Chemikalienbeständigkeit,
- gute Soforthaftung, vorzugsweise mindestens 1,5 N/15 mm
- gute Wärmestandfestigkeit, vorzugsweise mehr als 0,3 N/15 mm bei 90°C
- gute Schälfestigkeit, vorzugsweise mindestens 1,8 N/15 mm nach 24 Stunden
- es kann emulgatorarm oder nahezu emulgatorfrei gearbeitet werden (insbesondere sind geringe Mengen an Emulgator z.B. bei Verwendung einer emulgatorstabilisierten Polymersaat unschädlich)
- Kostenersparnis im Vergleich zu anderen schutzkolloidstabilisierten Polymerdispersionen, da aufgrund der in situ-Herstellung des Schutzkolloids die separate Synthese, der Transport und die Lagerung des Schutzkolloids entfallen können

Beispiele

Bestimmung der Teilchengröße

Die Bestimmung der Teilchengröße erfolgt mittels der Hydrodynamischen Fraktionierung mit einem PSDA (ParticleSize Distribution Analyser) der Fa. Polymer Labs. Der verwendete Säulentyp CartridgePL0850-1020 wird bei einem Durchfluss von 2 ml/min betrieben. Die Proben werden mit der Eluentlösung bis zu einer Absorption von 0,03 AU/μl verdünnt. Die Probe wird durch das Größenausschlussprinzip abhängig vom hydrodynamischen Durchmesser 10 eluiert. Das Elutionsmittel enthält 0,2 Gew.-% Dodecylpoly-(ethylenglycolether)23, 0,05 Gew.-% Natriumdodecylsulfat, 0,02 Gew.-% Natriumdihydrogenphosphat und 0,02 Gew.-% Natriumazid in entionisiertem-Wasser. Der pH liegt bei 5,8. Die Elutionszeit wird mit Polystyrol-Eichlatices kalibriert. Gemessen wird im Bereich 20 nm bis 1200 nm. Detektiert wird mit einem UV Detektor bei einer Wellenlänge 254 nm.

Bestimmung der Glasübergangstemperatur:

Die Glasübergangstemperatur wird mit Hilfe der Differentialkalorimetrie gemäß
ASTM D 3418-08 gemessen. Zum Konditionieren werden die Polymere ausgegossen, über Nacht eingetrocknet, dann

1 h im Vakuumtrockenschrank bei 120°C getrocknet. Bei der Messung wird die Probe auf 150°C aufgeheizt, rasch abgekühlt und dann mit 20 °C/min aufheizend bis 150°C gemessen. Angegeben ist die sogenannte Mid-Point Temperatur.

Beispiel 1 Zweistufige Polymerdispersion (2,36 pphm IPOx Tg -32 °C)

In einen 2L-Reaktor mit Ankerrührer, welcher auf 80°C geheizt wurde, wurden 5,9g einer Polystyrolsaat (Feststoffgehalt: 33%, Teilchengröße: 30nm) und 166,5 g entionisiertes Wasser gefüllt. Nach Erreichen einer Innentemperatur von 80°C wurden 46,4 g einer 7%igen Natriumperoxodisulfatlösung zugegeben und für 2 Minuten gerührt. Danach wurden über 60min 274,4 g einer Emulsion bestehend aus 92,7 g entionisiertem Wasser, 6,5 g Itaconsäure, 3,3 g Methacrylsäure 1,2 g Natriumlauryl-polyethoxysulfat (Disponil® FES 27, 28%ig in Wasser, BASF SE), 110,5 g n-Butylacrylat, 34,1 g Methylacrylat und 13,0 g Styrol zudosiert. Gleichzeitig wurde die Reaktionstemperatur über 60min auf 85°C erhöht. Nach Beendigung des ersten Emulsionszulaufs wurde über 10min mit 3,7%igem Ammoniak auf einen pH von 7,5 gestellt. Anschließend wurde ein zweiter Emulsionszulauf bestehend aus 92,7 g entionisiertem Wasser, 4,6 g Natriumlauryl-polyethoxysulfat (Disponil® FES 27, 28%ig in Wasser, BASF SE), 29,3 g Styrol, 423,4 g n-Butylacrylat, 15,3 g Isopropenyloxazolin und 14,6 g Methylacrylat in 120 min zudosiert. Nach Ende des Zulaufs wurden 41,6 g entionisiertes Wasser zugegeben und die Temperatur auf 80°C gesenkt. Bei einer Innentemperatur von 80°C wurden über 60min 35,5 g Acetonbisulfit (7%ig) und 13,0 g tert-Butylhydroperoxid (10%ig) zudosiert. Danach wurden 0,3 g Ammoniak (25%ig) und 41,6 g entionisiertes Wasser zugegeben und der Versuch auf Raumtemperatur gekühlt. Nach dem Kühlen wurde die Dispersion über einen 125μm Perlonfilter filtriert. Die Dispersion hatte einen Feststoffgehalt von 49,8 %, einen pH-Wert von 7,4, eine Gesamtglasübergangstemperatur von -32°C und eine Teilchengröße von 222 nm

Beispiel 2 Zweistufige Polymerdispersion (1 pphm IPOx)

In einen 2L-Reaktor mit Ankerrührer, welcher auf 80°C geheizt wurde, wurden 6,1 g einer Polystyrolsaat (FG: 33%, TG: 30nm) und 163,2 g entionisiertes Wasser gefüllt. Nach Erreichen einer Innentemperatur von 80°C wurden 45,0 g einer 7%igen Natriumperoxodisulfatlösung zugegeben und für 2 Minuten gerührt. Danach wurden über 120 min 302,7 g einer Emulsion bestehend aus 163,04 g entionisiertem Wasser, 6,3 g Itaconsäure, 3,15 g Acrylsäure, 3,4 g Natriumlauryl-polyethoxysulfat (Disponil® FES 27, 28%ig in Wasser, BASF SE), 173,6 g n-Butylacrylat, 192,0 g Methylacrylat und 0,6 g 2-Ethylhexylthioglykolat zudosiert. Gleichzeitig wurde die Reaktionstemperatur über 60min auf 85°C erhöht. Nach Beendigung des ersten Emulsionszulaufs wurde über 10min mit 5 %igem Ammoniak auf einen pH von 7, gestellt. Anschließend wurde ein zweiter Emulsionszulauf bestehend aus 45,6 g entionisiertem Wasser, 2,3 g Natriumlauryl-polyethoxysulfat (Disponil® FES 27, 28%ig in Wasser, BASF SE), 6,3 g Isopropenyloxazolin, 143,8 g n-Butylacrylat und 104,8 g Methylacrylat in 70min zudosiert. Nach Ende des Zulaufs wurden 31,5 g entionisiertes Wasser zugegeben und die Temperatur auf 80°C gesenkt. Bei einer Innentemperatur von 80°C wurden über 60min 50,2 g Acetonbisulfit (4,8 %ig) und 12,6 g tert-Butylhydroperoxid (10%ig) zudosiert. Danach wurden 34,3 g entionisiertes Wasser zugegeben und der Versuch auf Raumtemperatur gekühlt. Nach dem Kühlen wurde die Dispersion über einen 125μm Perlonfilter filtriert. Die Dispersion hatte einen Feststoffgehalt von 50,7 %, einen pH-Wert von 7,0, eine Gesamtglastemperatur von -16°C und eine Teilchengröße von 206 nm.

Beispiel 3 Dreistufige Polymerdispersion (2 pphm IPOx, Tg = -15°C)

In einen 2L-Reaktor mit Ankerrührer, welcher auf 80°C geheizt wurde, wurden 6,1g einer Polystyrolsaat (FG: 33%, TG: 30nm) und 168,8 g entionisiertes Wasser gefüllt. Nach Erreichen einer Innentemperatur von 80°C wurden 45 g einer 7%igen Natriumperoxodisulfatlösung zugegeben und für 2 Minuten gerührt. Danach wurden über 60min 238,9 g einer Emulsion bestehend aus 117,4g entionisiertem Wasser, 6,3g Itaconsäure, 1,1 g Natriumlauryl-polyethoxysulfat (Disponil® FES 27, 28%ig in Wasser, BASF SE), 29,9 g n-Butylacrylat, 83,5 g Methylacrylat und 0,6 g 2-Ethylhexylthioglykolat zudosiert. Gleichzeitig wurde die Reaktionstemperatur über 60 min auf 85 °C erhöht. Nach Beendigung des ersten Emulsionszulaufs folgte ein zweiter Emulsionszulauf bestehend aus 45,6g entionisiertem Wasser, 3,2 g Acrylsäure, 2,3 g Natriumlaurylpoly-ethoxysulfat (Disponil® FES 27, 28%ig in Wasser, BASF SE), 143,8 g n-Butylacrylat und 108,5 g Methylacrylat der in 60 min zudosiert wurde. 15min nachdem die zweite Emulsionsstufe gestartet wurde, wurde über 45 min 56,7 g 5%iges Ammoniak über einen separaten Zulauf mitdosiert. Nachdem der zweite Emulsions- sowie der Ammoniakzulauf beendet waren, wurde eine dritte Emulsionsstufe aus 45,6 g vollentsalztem Wasser, 2,3 g Natriumlaurylpolyethoxy-sulfat (Disponil® FES 27, 28%ig in Wasser, BASF SE), 140,7 g n-Butylacrylat, 101,6 g Methylacrylat und 12,6g Isopropenyloxazolin in 60min zudosiert. Nach Ende des Zulaufs wurden 31,5 g entionisiertes Wasser zugegeben und die Temperatur auf 80 °C gesenkt. Bei einer Innentemperatur von 80 °C wurden über 60 min 8,7 g Acetonbisulfit (13,2%ig) und 12,6 g tert-Butylhydroperoxid (10%ig) zudosiert. Danach wurden 34,3 g entionisiertes Wasser zugegeben und der Versuch auf Raumtemperatur gekühlt. Nach dem Kühlen wurde die Dispersion über einen 125 μm Perlonfilter

filtriert. Die Dispersion hatte einen Feststoffgehalt von 49,1 %, einen pH-Wert von 6,5, eine Gesamtglastemperatur von -15 °C und eine Teilchengröße von 179 nm.

Beispiel 4 Dreistufige Polymerdispersion (1,8 pphm IPOx, -14°C)

In einen 2L-Reaktor mit Ankerrührer, welcher auf 80°C geheizt wurde, wurden 6,11 g einer Polystyrolsaat (FG: 33%, TG: 30nm) und 172,0 g entionisiertes Wasser gefüllt. Nach Erreichen einer Innentemperatur von 80°C wurden 45 g einer 7%igen Natriumperoxodisulfatlösung zugegeben und für 2 Minuten gerührt. Danach wurden über 60 min 238,9 g einer Emulsion bestehend aus 117,4g entionisiertem Wasser, 6,3g Itaconsäure, 1,1 g Natriumlauryl-polyethoxysulfat (Disponil® FES 27, 28%ig in Wasser, BASF SE), 29,9 g n-Butylacrylat, 83,5 g Methylacrylat und 0,6 g 2-Ethylhexylthioglykolat zudosiert. Gleichzeitig wurde die Reaktionstemperatur über 60 min auf 85 °C erhöht. Nach Beendigung des ersten Emulsionszulaufs folgte ein zweiter Emulsionszulauf bestehend aus 45,6g entionisiertem Wasser, 0,63 g Acrylsäure, 2,3 g Natriumlauryl-polyethoxysulfat (Disponil® FES 27, 28%ig in Wasser, BASF SE), 6,3 g 2-Hydroxypropylacrylat, 140,7 g n-Butylacrylat und 107,9 g Methylacrylat der in 60 min zudosiert wurde. 15min nachdem die zweite Emulsionsstufe gestartet wurde, wurde über 45 min 51,7 g 3,66 %i-ges Ammoniak über einen separaten Zulauf mitdosiert. Nachdem der zweite Emulsions- sowie der Ammoniakzulauf beendet waren, wurde eine dritte Emulsionsstufe aus 45,6 g vollentsalztem Wasser, 2,3 g Natriumlauryl-polyethoxysulfat (Disponil® FES 27, 28%ig in Wasser, BASF SE), 6,3 g 2-Hydroxypropylacrylat, 140,7 g n-Butylacrylat, 96,2 g Methylacrylat und 11,7 g Isopropenyloxazolin in 60min zudosiert. Nach Ende des Zulaufs wurden 31,5 g entionisiertes Wasser zugegeben und die Temperatur auf 80 °C gesenkt. Bei einer Innentemperatur von 80 °C wurden über 60 min 8,7 g Acetonbisulfit (13,2%ig) und 12,6 g tert-Butylhydroperoxid (10%ig) zudosiert. Danach wurden 34,3 g entionisiertes Wasser zugegeben und der Versuch auf Raumtemperatur gekühlt. Nach dem Kühlen wurde die Dispersion über einen 125 µm Perlonfilter filtriert. Die Dispersion hatte einen Feststoffgehalt von 48,9%, einen pH-Wert von 7,5, eine Gesamtglastemperatur von -14 °C und eine Teilchengröße von 174 nm.

Beispiel 5 Dreistufige Polymerdispersion (1,4 pphm IPOx)

In einen 2L-Reaktor mit Ankerrührer, welcher auf 80 °C geheizt wurde, wurden 6,11 g einer Polystyrolsaat (FG: 33 %, TG: 30 nm) und 172,0 g entionisiertes Wasser gefüllt. Nach Erreichen einer Innentemperatur von 80 °C wurden 45 g einer 7%igen Natriumperoxodisulfatlösung zugegeben und für 2 Minuten gerührt. Danach wurden über 60 min 238,9 g einer Emulsion bestehend aus 117,4 g entionisiertem Wasser, 6,3 g Itaconsäure, 1,1 g Natriumlauryl-polyethoxysulfat (Disponil® FES 27, 28%ig in Wasser, BASF SE), 29,9 g n-Butylacrylat, 83,5 g Methylacrylat und 0,6 g 2-Ethylhexylthioglykolat zudosiert. Gleichzeitig wurde die Reaktionstemperatur über 60min auf 85°C erhöht. Nach Beendigung des ersten Emulsionszulaufs folgte ein zweiter Emulsionszulauf bestehend aus 45,6 g entionisiertem Wasser, 0,63 g Acrylsäure, 2,3 g Natriumlauryl-polyethoxysulfat (Disponil® FES 27, 28%ig in Wasser, BASF SE), 6,3 g 2-Hydroxypropylacrylat, 140,7 g n-Butylacrylat und 107,9 g Methylacrylat der in 60 min zudosiert wurde. 15 min nachdem die zweite Emulsionsstufe gestartet wurde, wurde über 45 min 51,7 g 3,66 %iges Ammoniak über einen separaten Zulauf mitdosiert. Nachdem der zweite Emulsionssowie der Ammoniakzulauf beendet waren, wurde eine dritte Emulsionsstufe aus 45,6 g vollentsalztem Wasser, 2,3 g Natriumlauryl-polyethoxysulfat (Disponil® FES 27, 28%ig in Wasser, BASF SE), 6,3g 2-Hydroxypropylacrylat, 140,7 g n-Butylacrylat, 99,1 g Methylacrylat und 8,82 g Isopropenyloxazolin in 60 min zudosiert. Nach Ende des Zulaufs wurden 31,5g entionisiertes Wasser zugegeben und die Temperatur auf 80°C gesenkt. Bei einer Innentemperatur von 80°C wurden über 60min 8,7 g Acetonbisulfit (13,2 %ig) und 12,6 g tert-Butylhydroperoxid (10%ig) zudosiert. Danach wurden 34,3 g entionisiertes Wasser zugegeben und der Versuch auf Raumtemperatur gekühlt. Nach dem Kühlen wurde die Dispersion über einen 125 µm Perlonfilter filtriert. Die Dispersion hatte einen Feststoffgehalt von 49,7 %, einen pH-Wert von 7, eine Gesamtglastemperatur von -14 °C und eine Teilchengröße von 183 nm.

Beispiel 6 Dreistufige Polymerdispersion (0,5 pphm IPOx)

In einen 2L-Reaktor mit Ankerrührer, welcher auf 80 °C geheizt wurde, wurden 6,1 g einer Polystyrolsaat (FG: 33 %, TG: 30 nm) und 172,0 g entionisiertes Wasser gefüllt. Nach Erreichen einer Innentemperatur von 80 °C wurden 45 g einer 7%igen Natriumperoxodisulfatlösung zugegeben und für 2 Minuten gerührt. Danach wurden über 60min 238,9 g einer Emulsion bestehend aus 117,4 g entionisiertem Wasser, 6,3 g Itaconsäure, 1,1 g Natriumlauryl-polyethoxysulfat (Disponil® FES 27, 28%ig in Wasser, BASF SE), 29,9 g n-Butylacrylat, 83,5 g Methylacrylat und 0,6 g 2-Ethylhexylthioglykolat zudosiert. Gleichzeitig wurde die Reaktionstemperatur über 60 min auf 85 °C erhöht. Nach Beendigung des ersten Emulsionszulaufs folgte ein zweiter Emulsionszulauf bestehend aus 45,6 g entionisiertem Wasser, 0,63 g Acrylsäure, 2,3 g Natriumlauryl-polyethoxysulfat (Disponil® FES 27, 28% ig in Wasser, BASF SE), 6,3 g 2-Hydroxypropylacrylat, 140,7 g n-Butylacrylat und 107,9 g Methylacrylat der in 60 min zudosiert wurde. 15 min nachdem die zweite

Emulsionsstufe gestartet wurde, wurde über 45 min 51,7 g 3,7%iges Ammoniak über einen separaten Zulauf mitdosiert. Nachdem der zweite Emulsions- sowie der Ammoniakzulauf beendet waren, wurde eine dritte Emulsionsstufe aus 45,6 g vollentsalztem Wasser, 2,3 g Natriumlauryl-polyethoxysulfat (Disponil® FES 27, 28%ig in Wasser, BASF SE), 6,3 g 2-Hydroxypropylacrylat, 140,7 g n-Butylacrylat, 104,9 g Methylacrylat und 3,0 g Isopropenyloxazolin in 60 min zudosiert. Nach Ende des Zulaufs wurden 31,5 g entionisiertes Wasser zugegeben und die Temperatur auf 80 °C gesenkt. Bei einer Innentemperatur von 80°C wurden über 60 min 8,7 g Acetonbisulfit (13,2%ig) und 12,6 g tert-Butylhydroperoxid (10%ig) zudosiert. Danach wurden 34,3 g entionisiertes Wasser zugegeben und der Versuch auf Raumtemperatur gekühlt. Nach dem Kühlen wurde die Dispersion über einen 125 µm Perlonfilter filtriert. Die Dispersion hatte einen Feststoffgehalt von 49,6 %, einen pH-Wert von 7, eine Gesamtglastempertur von -15 °C und eine Teilchengröße von 198 nm.

Vergleichsbeispiel 7 (ohne IPOx)

In einen 2L-Reaktor mit Ankerrührer, welcher auf 80 °C geheizt wurde, wurden 5,8 g einer Polystyrolsaat (FG: 33%, TG: 30nm) und 163,8 g entionisiertes Wasser gefüllt. Nach Erreichen einer Innentemperatur von 80 °C wurden 42,9 g einer 7%igen Natriumperoxodisulfatlösung zugegeben und für 2 Minuten gerührt. Danach wurden über 60min 227,5 g einer Emulsion bestehend aus 111,8g entionisiertem Wasser, 6,0g Itaconsäure, 1,1 g Natriumlauryl-polyethoxysulfat (Disponil® FES 27, 28%ig in Wasser, BASF SE), 28,5 g n-Butylacrylat, 79,6 g Methylacrylat und 0,6 g 2-Ethylhexylthioglykolat zudosiert. Gleichzeitig wurde die Reaktionstemperatur über 60 min auf 85 °C erhöht. Nach Beendigung des ersten Emulsionszulaufs wurde ein zweiter Emulsionszulauf bestehend aus 86,8 g entionisiertem Wasser, 0,6 g Acrylsäure, 4,3 g Natriumlaurylpoly-ethoxysulfat (Disponil® FES 27, 28%ig in Wasser, BASF SE), 12,0 g 2-Hydroxypropylacrylat, 267,9 g n-Butylacrylat und 205,5 g Methylacrylat in 120 min zudosiert. 15min nachdem die zweite Emulsionsstufe gestartet wurde, wurde über 105min 49,2 g 3,66%iges Ammoniak über einen separaten Zulauf mitdosiert. Nach Ende des Zulaufs wurden 30,0 g entionisiertes Wasser zugegeben und die Temperatur auf 80 °C gesenkt. Bei einer Innentemperatur von 80 °C wurden über 60 min 8,2 g Acetonbisulfit (13,2%ig) und 12,0 g tert-Butylhydroperoxid (10%ig) zudosiert. Danach wurden 0,2 g Ammoniak (25%ig) und 32,7 g entionisiertes Wasser zugegeben und der Versuch auf Raumtemperatur gekühlt. Nach dem Kühlen wurde die Dispersion über einen 125 µm Perlonfilter filtriert. Die Dispersion hatte einen Feststoffgehalt von 50,7 %, einen pH-Wert von 6,5, eine Gesamtglastemperatur von -15 °C und eine Teilchengröße von 185 nm (Hydrodynamische Chromatografie).

Vergleichsbeispiel 8 (emulgatorhaltig)

In einen 2L-Reaktor mit Ankerrührer, welcher auf 80°C geheizt wurde, wurden 6,1 g einer Polystyrolsaat (FG: 33%, TG: 30nm) und 163,2 g entionisiertes Wasser gefüllt. Nach Erreichen einer Innentemperatur von 80°C wurden 45,0 g einer 7%igen Natriumperoxodisulfatlösung zugegeben und für 2 Minuten gerührt. Danach wurden über 120 min 310,9 g einer Emulsion bestehend aus 140,9 g entionisiertem Wasser, 6,3 g Itaconsäure, 3,15 g Acrylsäure, 40,5 g Natriumlauryl-polyethoxysulfat (Disponil® FES 27, 28%ig in Wasser, BASF SE), 173,6 g n-Butylacrylat, 192,0 g Methylacrylat und 0,6 g 2-Ethylhexylthioglykolat zudosiert. Gleichzeitig wurde die Reaktionstemperatur über 60min auf 85°C erhöht. Nach Beendigung des ersten Emulsionszulaufs wurde über 15 min mit 5 %igem Ammoniak auf einen pH von 7, gestellt. Anschließend wurde ein zweiter Emulsionszulauf bestehend aus 23,0 g entionisiertem Wasser, 27,0 g Natriumlauryl-polyethoxysulfat (Disponil® FES 27, 28%ig in Wasser, BASF SE), 6,3 g Isopropenyloxazolin, 143,8 g n-Butylacrylat und 104,8 g Methylacrylat in 70min zudosiert. Nach Ende des Zulaufs wurden 31,5 g entionisiertes Wasser zugegeben und die Temperatur auf 80°C gesenkt. Bei einer Innentemperatur von 80°C wurden über 60min 50,2 g Acetonbisulfit (4,8 %ig) und 12,6 g tert-Butylhydroperoxid (10%ig) zudosiert. Danach wurden 44,8 g entionisiertes Wasser zugegeben und der Versuch auf Raumtemperatur gekühlt. Nach dem Kühlen wurde die Dispersion über einen 125µm Perlonfilter filtriert. Die Dispersion hatte einen Feststoffgehalt von 49,4 %, einen pH-Wert von 7,0, eine Gesamtglastemperatur von -16°C und eine Teilchengröße von172 nm.

Herstellung von Verbundfolien:

Die neutralisierten Polymerdispersionen werden mit einer Trockenschichtdicke von 2 g/m$^2$ (bezogen auf Feststoffgehalt) auf handelsübliche Folien gerakelt (OPP-ink; bedrucktes orientiertes Polypropylen). Nach Trocknen mit Warmluft werden die so beschichteten Folien mit einer zweiten Folie (metallisiertes cast PP) aufgerollt und anschließend mit einem Druck von 6,5 bar in einer Rollenpresse mit 5 m/min bei 70 °C verpresst. Anschließend werden die Verbundfolien 1 Tag bei Raumtemperatur und Normklima gelagert.

Bestimmung der Schälfestigkeit (Soforthaftung und Wärmestandfestigkeit):

Zur Bestimmung der Schälfestigkeit werden die Verbundfolien in 15 mm breite Streifen zerschnitten. Anschließend werden die Streifen bei 23 °C in einer Universalprüfmaschine für Schälfestigkeiten der Fa. Zwick (Typ 1120.25.01) mit einer Geschwindigkeit von 100 mm/min bei einem Winkel von 2 x 90° (180°) abgezogen und die hierfür erforderliche Kraft in Newton gemessen. Zur Bestimmung der Soforthaftung wurde die Schälfestigkeit bei 23 °C nach 1 Minute gemessen. Zur Bestimmung der Wärmestandfestigkeit wurde die Schälfestigkeit in einer beheizten Kammer bei 90 °C gemessen. Um die Chemikalienbeständigkeit der Klebstoffe zu beschreiben, wurden die Laminate 7 Tage bei 50°C in Tomatenketchup gelagert und danach von ihnen bei 23°C die Schälfestigkeiten ermittelt. Die Ergebnisse sind in Tabelle 1 zusammengestellt.

Tabelle 1: Testergebnisse Schälfestigkeit

| Beispiel | Schälfestigkeit nach 24h [N/15 mm] | Wärmestandfestigkeit bei 90°C [N/15 mm] | Schälfestigkeit nach Lagerung in Ketchup [N/15 mm] |
|---|---|---|---|
| 1 | 3,5 (MB) | 0,5 | 2,5 |
| 2 | 2,5 | 0,6 | 2,6 |
| 3 | 3,2(MB) | 0,5 | 2,7 |
| 3 [1)] | 3,1 (MB) | 0,4 | 2,6 |
| 4 | 3,2 (MB) | 0,5 | 2,4 |
| 5 | 3,4 (MB) | 0,5 | 2,5 |
| 6 | 1,8 | 0,5 | 2,3 |
| 7 [2)] | 1,8 | 0,1 | 0,4 |
| 8 [2)] | 0,5 | 0,3 | 0,1 |
| [1)] nach Lagerung 10 Tage bei 50°C<br>[2)] Vergleich<br>MB: Materialbruch | | | |

Tabelle 2. Einfluss des Emulgators auf die Soforthaftung

| Beispiel | Soforthaftung [N/15 mm] | Schälfestigkeit nach 24h [N/15 mm] |
|---|---|---|
| 3 | 2,5 | 3,2 |
| 3 + 2,5 pphm Disponil FES 27 | 1,0 | 1,9 |
| 2 | 2,1 | 2,6 |
| 8 (Vergleich) | 0,5 | 1,0 |

Die Versuche zeigen, dass die Copolymerisation von oxazolinhaltigen Monomeren in einer Emulsionspolymerisatstufe nach der Neutralisation der Säuremonomere in der ersten Stufe eine deutliche Verbesserung der Schälfestigkeiten auch unter Wärmebelastung und vor allem unter Einfluss aggressiver Medien (z.B. nach Lagerung in Ketchup) bewirkt. Durch die Emulgatorarmut erhalten die Dispersionen eine hervorragende Soforthaftung (Tabelle 2).

## Patentansprüche

**1.** Wässrige Polymerdispersion für die Verbundfolienkaschierung, hergestellt durch radikalische Emulsionspolymerisation,

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, und wobei

- in einer weiteren Stufe eine Polymerdispersion in wässrigem Medium und in Gegenwart des ersten Polymerisats durch radikalische Emulsionspolymerisation einer von der ersten Zusammensetzung verschiedenen weiteren Zusammensetzung, enthaltend ethylenisch ungesättigte, radikalisch polymerisierbare Monomere, hergestellt wird,
- wobei die Monomeren der ersten Stufe mindestens ein Monomer mit mindestens einer Säuregruppe in einer Menge von mindestens 0,1 Gew.-Teilen, bezogen auf 100 Gew.-Teile der Monomere aller Stufen, umfassen, und
- wobei die Monomeren der weiteren Stufe mindestens ein Monomer mit mindestens einer Oxazolingruppe umfassen, und
- wobei die Polymerisation der ersten Stufe bei einem pH-Wert kleiner 5 erfolgt und vor der Polymerisation der weiteren Stufe Säuregruppen soweit mit flüchtiger Base, vorzugsweise wässriger Ammoniaklösung neutralisiert werden, dass der pH-Wert der Polymerdispersion vor der weiteren Stufe größer 5 beträgt, und
- wobei insgesamt weniger als 0,5 Gewichtsteile, bezogen auf 100 Gewichtsteile Monomere, oder kein Emulgator verwendet werden, und
- wobei die Glasübergangstemperatur des hergestellten Polymerisats kleiner als -10 °C beträgt.

2. Polymerdispersion nach dem vorhergehenden Anspruch, **dadurch gekennzeichnet, dass** die Oxazolingruppen enthaltenden Monomere ausschließlich in der weiteren Stufe eingesetzt werden und dass sie in einer Menge von 0,5 bis 4 Gewichtsteilen auf 100 Gewichtsteile Monomere eingesetzt werden.

3. Polymerdispersion nach einem der vorhergehenden Ansprüche, **dadurch gekennzeichnet, dass** das Oxazolingruppen enthaltenden Monomere ausgewählt ist aus Verbindungen der Formel

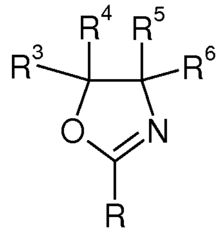

wobei die Reste die folgenden Bedeutungen haben:

R ist ein $C_{2-20}$-Alkenylrest umfassend mindestens eine ethylenisch ungesättigte Gruppe;
$R^3$, $R^4$, $R^5$, $R^6$ sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl.

4. Polymerdispersion nach einem der vorhergehenden Ansprüche, **dadurch gekennzeichnet, dass** die Oxazolingruppen enthaltenden Monomere ausgewählt sind aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-tetramethyl-2-oxazolin, 2-Isopropenyl-2-oxazolin, 2-Isopropenyl-4-methyl-2-oxazolin, 2-Isopro-penyl-5-methyl-2-oxazolin, 2-Isopropenyl-4-ethyl-2-oxazolin, 2-Isopropenyl-5-ethyl-2-oxazolin, 2-lsopropenyl-4,4-dimethyl-2-oxazolin, 2- Isopropenyl-5,5-dimethyl-2-oxazolin und 2- Isopropenyl-4,4,5,5-tetramethyl-2-oxazolin.

5. Polymerdispersion nach einem der vorhergehenden Ansprüche, **dadurch gekennzeichnet, dass** in der ersten Stufe Säuregruppen aufweisende Monomere mit Monomeren ohne Säuregruppen copolymerisiert werden, wobei das Gewichtsverhältnis von Säuregruppen aufweisenden Monomeren zu Monomeren ohne Säuregruppen im Bereich von 5:95 bis 15:85 liegt.

6. Polymerdispersion nach einem der vorhergehenden Ansprüche, **dadurch gekennzeichnet, dass** die in der ersten Stufe eingesetzten Monomeren mit mindestens einer Säuregruppe ausgewählt sind aus der Gruppe bestehend aus Acrylsäure, Methacrylsäure, Itaconsäure, Maleinsäure, Fumarsäure, Crotonsäure, Vinylessigsäure, Vinylmilchsäure, ungesättigten Phosphonsäuren und Mischungen dieser Monomere; und die in der ersten Stufe eingesetzten Monomeren ohne Säuregruppe ausgewählt sind aus der Gruppe bestehend aus C1- bis C10-Alkylacrylaten und C1- bis C10-Alkylmethacrylaten und Mischungen dieser Monomere.

7. Polymerdispersion nach einem der vorhergehenden Ansprüche, **dadurch gekennzeichnet, dass** mindestens 60 Gew.% der in der weiteren Stufe eingesetzten Monomeren ausgewählt sind aus der Gruppe bestehend aus C1- bis

C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere.

**8.** Polymerdispersion nach einem der vorhergehenden Ansprüche, **dadurch gekennzeichnet, dass** es sich bei den Polymerisaten aller Stufen um Polymerisate handelt, die neben Oxazolingruppen enthaltenden Monomeren und Säuremonomeren ausschließlich aus Derivaten der (Meth)acrylsäure gebildet sind.

**9.** Polymerdispersion nach einem der vorhergehenden Ansprüche, **dadurch gekennzeichnet, dass** bei der Polymerisation der ersten Stufe ein Molekulargewichtsregler eingesetzt wird.

**10.** Polymerdispersion nach einem der vorhergehenden Ansprüche, **dadurch gekennzeichnet, dass** das Gewichtsverhältnis der Menge der in der ersten Stufe eingesetzten Monomere zur Menge der in der weiteren Stufe eingesetzten Monomere von 10:90 bis 65:35 beträgt.

**11.** Polymerdispersion nach einem der vorhergehenden Ansprüche, **dadurch gekennzeichnet, dass** die Polymerisation der ersten Stufe in Gegenwart eines Saatlatex erfolgt.

**12.** Polymerdispersion nach einem der vorhergehenden Ansprüche, **dadurch gekennzeichnet, dass** die in der weiteren Stufe eingesetzten Monomeren maximal 1 Gewichtsteil, bezogen auf 100 Gewichtsteile Monomere mit Säuregruppen, oder keine Monomere mit Säuregruppen umfassen.

**13.** Verfahren zur Herstellung einer wässrigen Polymerdispersion für die Verbundfolienkaschierung,

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, und wobei
- in einer weiteren Stufe eine Polymerdispersion in wässrigem Medium und in Gegenwart des ersten Polymerisats durch radikalische Emulsionspolymerisation einer von der ersten Zusammensetzung verschiedenen weiteren Zusammensetzung, enthaltend ethylenisch ungesättigte, radikalisch polymerisierbare Monomere, hergestellt wird,
- wobei die Monomeren der ersten Stufe mindestens ein Monomer mit mindestens einer Säuregruppe in einer Menge von mindestens 0,1 Gew.-Teilen, bezogen auf 100 Gew.-Teile der Monomere aller Stufen, umfassen, und
- wobei die Monomeren der weiteren Stufe mindestens ein Monomer mit mindestens einer Oxazolingruppe umfassen, und
- wobei die Polymerisation der ersten Stufe bei einem pH-Wert kleiner 5 erfolgt und vor der Polymerisation der weiteren Stufe Säuregruppen soweit mit flüchtiger Base, vorzugsweise wässriger Ammoniaklösung, neutralisiert werden, dass der pH-Wert der Polymerdispersion vor der weiteren Stufe größer 5 beträgt, und
- wobei insgesamt weniger als 0,5 Gewichtsteile, bezogen auf 100 Gewichtsteile Monomere, oder kein Emulgator verwendet werden, und
- wobei die Glasübergangstemperatur des hergestellten Polymerisats kleiner als -10 °C beträgt.

**14.** Verwendung der wässrigen Polymerdispersion nach einem der Ansprüche 1 bis 12 oder der nach dem vorhergehenden Anspruch hergestellten wässrigen Polymerdispersion als Kaschierklebstoff, zur Herstellung von Kaschierklebstoffen oder bei der Herstellung von Verbundfolien.

**15.** Verbundfolie, welche eine erste und mindestens eine zweite Folie aufweist, welche miteinander verklebt sind unter Verwendung eines Klebstoffs enthaltend die wässrige Polymerdispersion gemäß einem der Ansprüche 1 bis 12 oder einer nach Anspruch 13 hergestellten wässrigen Polymerdispersion.

**16.** Verfahren zur Herstellung von Verbundfolien, **dadurch gekennzeichnet, dass** eine wässrige Polymerdispersion gemäß einem der Ansprüche 1 bis 12 oder eine nach Anspruch 13 hergestellte wässrige Polymerdispersion zur Verfügung gestellt wird und mindestens zwei Folien unter Verwendung der wässrigen Polymerdispersion miteinander verklebt werden.

## Claims

1. An aqueous polymer dispersion for composite film lamination, prepared by radical emulsion polymerization,

    - where initially in a first stage in aqueous medium a first polymer dispersed in water is prepared by radical emulsion polymerization, the first polymer being prepared from a first composition comprising ethylenically unsaturated, radically polymerizable monomers, and where
    - in a further stage a polymer dispersion is prepared in aqueous medium and in the presence of the first polymer by radical emulsion polymerization of a further composition, which is different from the first composition and comprises ethylenically unsaturated, radically polymerizable monomers,
    - where the monomers of the first stage comprise at least one monomer having at least one acid group, in an amount of at least 0.1 part by weight, based on 100 parts by weight of the monomers of all stages, and
    - where the monomers of the further stage comprise at least one monomer having at least one oxazoline group, and
    - where the polymerization of the first stage takes place at a pH less than 5 and, before the polymerization of the further stage, acid groups are neutralized with volatile base, preferably aqueous ammonia solution, to an extent such that the pH of the polymer dispersion before the further stage is greater than 5, and
    - where in total less than 0.5 part by weight, based on 100 parts by weight of monomers, of emulsifier, or no emulsifier, is used, and
    - where the glass transition temperature of the polymer prepared is less than -10°C.

2. The polymer dispersion according to the preceding claim, wherein the monomers comprising oxazoline groups are used exclusively in the further stage and wherein they are used in an amount of 0.5 to 4 parts by weight per 100 parts by weight of monomers.

3. The polymer dispersion according to either of the preceding claims, wherein the monomer comprising oxazoline groups is selected from compounds of the formula

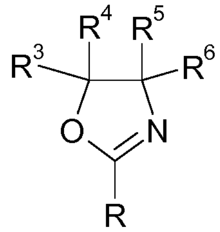

where the radicals have the following definitions:

R is a $C_{2-20}$ alkenyl radical comprising at least one ethylenically unsaturated group;
$R^3$, $R^4$, $R^5$, and $R^6$ are selected independently of one another from H, halogen, $C_{1-20}$ alkyl, $C_{2-20}$ alkenyl, $C_{6-20}$ aryl, $C_{7-32}$ arylalkyl, $C_{1-20}$ hydroxyalkyl, $C_{1-20}$ aminoalkyl, and $C_{1-20}$ haloalkyl.

4. The polymer dispersion according to any of the preceding claims, wherein the monomers comprising oxazoline groups are selected from 2-vinyl-2-oxazoline, 2-vinyl-4-methyl-2-oxazoline, 2-vinyl-5-methyl-2-oxazoline, 2-vinyl-4-ethyl-2-oxazoline, 2-vinyl-4,4-dimethyl-2-oxazoline, 2-vinyl-5,5-dimethyl-2-oxazoline, 2-vinyl-4,4,5,5-tetramethyl-2-oxazoline, 2-isopropenyl-2-oxazoline, 2-isopropenyl-4-methyl-2-oxazoline, 2-isopropenyl-5-methyl-2-oxazoline, 2-isopropenyl-4-ethyl-2-oxazoline, 2-isopropenyl-5-ethyl-2-oxazoline, 2-isopropenyl-4,4-dimethyl-2-oxazoline, 2-isopropenyl-5,5-dimethyl-2-oxazoline and 2-isopropenyl-4,4,5,5-tetramethyl-2-oxazoline.

5. The polymer dispersion according to any of the preceding claims, wherein, in the first stage, monomers containing acid groups are copolymerized with monomers without acid groups, the weight ratio of monomers containing acid groups to monomers without acid groups being in the range from 5:95 to 15:85.

6. The polymer dispersion according to any of the preceding claims, wherein the monomers with at least one acid group that are used in the first stage are selected from the group consisting of acrylic acid, methacrylic acid, itaconic acid, maleic acid, fumaric acid, crotonic acid, vinylacetic acid, vinyllactic acid, unsaturated phosphonic acids, and mixtures of these monomers; and the monomers without acid group that are used in the first stage are selected

from the group consisting of C1 to C10 alkyl acrylates and C1 to C10 alkyl methacrylates, and mixtures of these monomers.

**7.** The polymer dispersion according to any of the preceding claims, wherein at least 60% by weight of the monomers used in the further stage are selected from the group consisting of C1 to C20 alkyl acrylates, C1 to C20 alkyl methacrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers.

**8.** The polymer dispersion according to any of the preceding claims, wherein the polymers of all stages are polymers which apart from acid monomers and monomers comprising oxazoline groups are formed exclusively of derivatives of (meth)acrylic acid.

**9.** The polymer dispersion according to any of the preceding claims, wherein a chain transfer agent is used in the polymerization of the first stage.

**10.** The polymer dispersion according to any of the preceding claims, wherein the weight ratio of the amount of the monomers used in the first stage to the amount of the monomers used in the further stage is from 10:90 to 65:35.

**11.** The polymer dispersion according to any of the preceding claims, wherein the polymerization of the first stage takes place in the presence of a seed latex.

**12.** The polymer dispersion according to any of the preceding claims, wherein the monomers used in the further stage comprise not more than 1 part by weight, based on 100 parts by weight, of monomers with acid groups, or comprise no monomers with acid groups.

**13.** A process for preparing an aqueous polymer dispersion for composite film lamination,

- where initially in a first stage in aqueous medium a first polymer dispersed in water is prepared by radical emulsion polymerization, the first polymer being prepared from a first composition comprising ethylenically unsaturated, radically polymerizable monomers, and where
- in a further stage a polymer dispersion is prepared in aqueous medium and in the presence of the first polymer by radical emulsion polymerization of a further composition, which is different from the first composition and comprises ethylenically unsaturated, radically polymerizable monomers,
- where the monomers of the first stage comprise at least one monomer having at least one acid group, in an amount of at least 0.1 part by weight, based on 100 parts by weight of the monomers of all stages, and
- where the monomers of the further stage comprise at least one monomer having at least one oxazoline group, and
- where the polymerization of the first stage takes place at a pH less than 5 and, before the polymerization of the further stage, acid groups are neutralized with volatile base, preferably aqueous ammonia solution, to an extent such that the pH of the polymer dispersion before the further stage is greater than 5, and
- where in total less than 0.5 part by weight, based on 100 parts by weight of monomers, of emulsifier, or no emulsifier, is used, and
- where the glass transition temperature of the polymer prepared is less than -10°C.

**14.** The use of the aqueous polymer dispersion according to any of claims 1 to 12 or of the aqueous polymer dispersion prepared according to the preceding claim as a laminating adhesive, for producing laminating adhesives, or in the production of composite films.

**15.** A composite film which comprises a first film and at least one second film, which are bonded to one another using an adhesive comprising the aqueous polymer dispersion according to any of claims 1 to 12 or of an aqueous polymer dispersion prepared according to claim 13.

**16.** A process for producing composite films, which comprises providing an aqueous polymer dispersion according to any of claims 1 to 12 or an aqueous polymer dispersion prepared according to claim 13 and bonding at least two films with one another using the aqueous polymer dispersion.

## Revendications

**1.** Dispersion aqueuse de polymère pour le contre-collage de films composites, fabriquée par polymérisation en émulsion radicalaire,

- un premier polymère dispersé dans de l'eau étant tout d'abord fabriqué lors d'une première étape dans un milieu aqueux par polymérisation en émulsion radicalaire, le premier polymère étant fabriqué à partir d'une première composition, contenant des monomères éthyléniquement insaturés, polymérisables par voie radicalaire, et
- une dispersion de polymère étant fabriquée lors d'une étape ultérieure en milieu aqueux et en présence du premier polymère par polymérisation en émulsion radicalaire d'une autre composition différente de la première composition, contenant des monomères éthyléniquement insaturés, polymérisables par voie radicalaire,
- les monomères de la première étape comprenant au moins un monomère qui contient au moins un groupe acide en une quantité d'au moins 0,1 partie en poids, par rapport à 100 parties en poids des monomères de toutes les étapes, et
- les monomères de l'étape ultérieure comprenant au moins un monomère qui contient au moins un groupe oxazoline, et
- la polymérisation de la première étape ayant lieu à un pH inférieur à 5 et, avant la polymérisation de l'étape ultérieure, les groupes acides étant neutralisés avec une base volatile, de préférence une solution aqueuse d'ammoniac, de telle sorte que le pH de la dispersion de polymère avant l'étape ultérieure soit supérieur à 5, et
- au total moins de 0,5 partie en poids, par rapport à 100 parties en poids de monomères, d'un émulsifiant étant utilisé ou aucun émulsifiant n'étant utilisé, et
- la température de transition vitreuse du polymère fabriqué étant inférieure à -10 °C.

**2.** Dispersion de polymère selon la revendication précédente, **caractérisée en ce que** les monomères contenant des groupes oxazoline sont utilisés exclusivement dans l'étape ultérieure, et **en ce qu'**ils sont utilisés en une quantité de 0,5 à 4 parties en poids pour 100 parties en poids de monomères.

**3.** Dispersion de polymère selon l'une quelconque des revendications précédentes, **caractérisée en ce que** les monomères contenant des groupes oxazoline sont choisis parmi les composés de formule

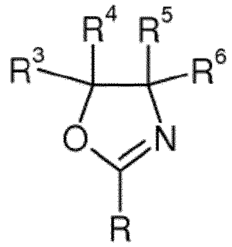

dans laquelle les radicaux ont les significations suivantes :

R est un radical alcényle en $C_{2-20}$ comprenant au moins un groupe éthyléniquement insaturé ;
$R^3$, $R^4$, $R^5$, $R^6$ sont choisis indépendamment les uns des autres parmi H, halogène, alkyle en $C_{1-20}$, alcényle en $C_{2-20}$, aryle en $C_{6-20}$, arylalkyle en $C_{7-32}$, hydroxyalkyle en $C_{1-20}$, aminoalkyle en $C_{1-20}$ et haloalkyle en $C_{1-20}$.

**4.** Dispersion de polymère selon l'une quelconque des revendications précédentes, **caractérisée en ce que** les monomères contenant des groupes oxazoline sont choisis parmi la 2-vinyl-2-oxazoline, la 2-vinyl-4-méthyl-2-oxazoline, la 2-vinyl-5-méthyl-2-oxazoline, la 2-vinyl-4-éthyl-2-oxazoline, la 2-vinyl-4,4-diméthyl-2-oxazoline, la 2-vinyl-5,5-diméthyl-2-oxazoline, la 2-vinyl-4,4,5,5-tétraméthyl-2-oxazoline, la 2-isopropényl-2-oxazoline, la 2-isopropényl-4-méthyl-2-oxazoline, la 2-isopropényl-5-méthyl-2-oxazoline, la 2-isopropényl-4-éthyl-2-oxazoline, la 2-isopropényl-5-éthyl-2-oxazoline, la 2-isopropényl-4,4-diméthyl-2-oxazoline, la 2-isopropényl-5,5-diméthyl-2-oxazoline et la 2-isopropényl-4,4,5,5-tétraméthyl-2-oxazoline.

**5.** Dispersion de polymère selon l'une quelconque des revendications précédentes, **caractérisée en ce que**, lors de la première étape, des monomères comprenant des groupes acides sont copolymérisés avec des monomères sans groupes acides, le rapport en poids entre les monomères comprenant des groupes acides et les monomères sans groupes acides se situant dans la plage allant de 5:95 à 15:85.

**6.** Dispersion de polymère selon l'une quelconque des revendications précédentes, **caractérisée en ce que** les monomères comprenant au moins un groupe acide utilisés lors de la première étape sont choisis dans le groupe constitué par l'acide acrylique, l'acide méthacrylique, l'acide itaconique, l'acide maléique, l'acide fumarique, l'acide crotonique, l'acide vinylacétique, l'acide vinyllactique, les acides phosphoniques insaturés et les mélanges de ces monomères ; et les monomères sans groupe acide utilisés lors de la première étape sont choisis dans le groupe constitué par les acrylates d'alkyle en $C_1$ à C10 et les méthacrylates d'alkyle en $C_1$ à C10 et les mélanges de ces monomères.

**7.** Dispersion de polymère selon l'une quelconque des revendications précédentes, **caractérisée en ce qu'**au moins 60 % en poids des monomères utilisés lors de l'étape ultérieure sont choisis dans le groupe constitué par les acrylates d'alkyle en C1 à C20, les méthacrylates d'alkyle en C1 à C20, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons et les mélanges de ces monomères.

**8.** Dispersion de polymère selon l'une quelconque des revendications précédentes, **caractérisée en ce que** les polymères de toutes les étapes sont des polymères qui, outre les monomères contenant des groupes oxazoline et les monomères acides, sont formés exclusivement par des dérivés de l'acide (méth)acrylique.

**9.** Dispersion de polymère selon l'une quelconque des revendications précédentes, **caractérisée en ce qu'**un régulateur du poids moléculaire est utilisé lors de la polymérisation de la première étape.

**10.** Dispersion de polymère selon l'une quelconque des revendications précédentes, **caractérisée en ce que** le rapport en poids entre la quantité de monomères utilisés lors de la première étape et la quantité de monomères utilisés lors de l'étape ultérieure est de 10:90 à 65:35.

**11.** Dispersion de polymère selon l'une quelconque des revendications précédentes, **caractérisée en ce que** la polymérisation de la première étape a lieu en présence d'un latex germe.

**12.** Dispersion de polymère selon l'une quelconque des revendications précédentes, **caractérisée en ce que** les monomères utilisés lors de l'étape ultérieure comprennent au plus 1 partie en poids, par rapport à 100 parties en poids de monomères contenant des groupes acides, ou aucun monomère contenant des groupes acides.

**13.** Procédé de fabrication d'une dispersion aqueuse de polymère pour le contre-collage de films composites,

- un premier polymère dispersé dans de l'eau étant tout d'abord fabriqué lors d'une première étape dans un milieu aqueux par polymérisation en émulsion radicalaire, le premier polymère étant fabriqué à partir d'une première composition, contenant des monomères éthyléniquement insaturés, polymérisables par voie radicalaire, et
- une dispersion de polymère étant fabriquée lors d'une étape ultérieure en milieu aqueux et en présence du premier polymère par polymérisation en émulsion radicalaire d'une autre composition différente de la première composition, contenant des monomères éthyléniquement insaturés, polymérisables par voie radicalaire,
- les monomères de la première étape comprenant au moins un monomère qui contient au moins un groupe acide en une quantité d'au moins 0,1 partie en poids, par rapport à 100 parties en poids des monomères de toutes les étapes, et
- les monomères de l'étape ultérieure comprenant au moins un monomère qui contient au moins un groupe oxazoline, et
- la polymérisation de la première étape ayant lieu à un pH inférieur à 5 et, avant la polymérisation de l'étape ultérieure, les groupes acides étant neutralisés avec une base volatile, de préférence une solution aqueuse d'ammoniac, de telle sorte que le pH de la dispersion de polymère avant l'étape ultérieure soit supérieur à 5, et
- au total moins de 0,5 partie en poids, par rapport à 100 parties en poids de monomères, d'un émulsifiant étant utilisé ou aucun émulsifiant n'étant utilisé, et
- la température de transition vitreuse du polymère fabriqué étant inférieure à -10 °C.

**14.** Utilisation de la dispersion aqueuse de polymère selon l'une quelconque des revendications 1 à 12 ou de la dispersion aqueuse de polymère fabriquée selon la revendication précédente en tant qu'adhésif de contre-collage, pour la fabrication d'adhésifs de contre-collage ou lors de la fabrication de films composites.

**15.** Film composite, qui comprend un premier et au moins un deuxième film, qui sont collés l'un avec l'autre en utilisant un adhésif contenant la dispersion aqueuse de polymère selon l'une quelconque des revendications 1 à 12 ou une dispersion aqueuse de polymère fabriquée selon la revendication 13.

**16.** Procédé de fabrication de films composites, **caractérisé en ce qu'**une dispersion aqueuse de polymère selon l'une quelconque des revendications 1 à 12 ou une dispersion aqueuse de polymère fabriquée selon la revendication 13 est mise à disposition et au moins deux films sont collés l'un avec l'autre en utilisant la dispersion aqueuse de polymère.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0176609 A
- JP 2013057081 A
- WO 06112538 A
- WO 2011154920 A


### In der Beschreibung aufgeführte Nicht-Patentliteratur


- **T.G. FOX.** Bull. Am. Phys. Soc. 1956, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966